# EUROPEAN PATENT APPLICATION

(11) **EP 4 386 447 A1**
(43) Date of publication of application: **19.06.2024**
(21) Application number: 21955402.9
(22) Date of filing: 31.08.2021
(51) Int. Cl.: G01S 13/88, B60R 21/015, B60W 50/08

(54) **DETECTION METHOD, DETECTION APPARATUS AND RADAR**

(71) Applicant: Huawei Technologies Co., Ltd., Shenzhen, Guangdong 518129 (CN)
(72) Inventor: YANG, Jinghuan, Shenzhen, Guangdong 518129 (CN); LAN, Ruidong, Shenzhen, Guangdong 518129 (CN); LI, Teng, Shenzhen, Guangdong 518129 (CN)
(74) Representative: Isarpatent
(86) International application number: PCT/CN2021/115672
(87) International publication number: WO 2023/028834

(57) **Abstract**

A detection method, a detection apparatus, a radar, a computer-readable storage medium, a computer program product, and a vehicle are provided. The detection method includes: transmitting a first transmit wave to a cockpit area of a vehicle (S 100); receiving a first reflection wave corresponding to the first transmit wave (S200); determining existence information and location information of a living body in the cockpit area based on the first reflection wave (S300); and transmitting, to a first area in which the living body is located, a second transmit wave when the existence information indicates that the living body exists in the cockpit area (S400), where a power of the second transmit wave is higher than a power of the first transmit wave, and the first area in which the living body is located is determined based on the location information of the living body. According to the foregoing method, detection of a plurality of living bodies in the cockpit area of the vehicle can be implemented, detection precision of the living bodies can be ensured, and cockpit experience of a user can be improved.

## Description

### TECHNICAL FIELD

Embodiments of this application relate to the field of intelligent vehicles, and specifically, to a detection method, a detection apparatus, and a radar.

### BACKGROUND

At present, sudden death of drivers caused by cardiovascular diseases frequently occurs, and from time to time infants and pets have died from heatstroke when trapped in vehicle cockpits. It is necessary to detect inside areas of the vehicle cockpits, to reduce occurrence of such cases.

Currently, a living body can be detected through contact detection. The "contact" means that the living body is detected by using a light signal, an electrocardiogram signal, or imaging of blood vessels detected by a sensor in contact with skin. Because the contact detection requires the sensor to be in contact with the skin, the contact detection is inconvenient to operate, cannot be used in both a person and an animal, and cannot implement detection of a plurality of living bodies by using a set of devices in a cockpit.

Therefore, how to implement contactless detection of a plurality of living bodies by one device in a cockpit within a long time period and improve detection precision of the living bodies becomes an urgent problem to be resolved in the industry.

### SUMMARY

In view of this, embodiments of this application provide a detection method, a detection apparatus, and a radar, to implement contactless detection of a plurality of living bodies by one device in a cockpit area of a vehicle within a long time period, and ensure detection precision of the living bodies.

According to a first aspect of embodiments of this application, a detection method is provided, including: transmitting a first transmit wave to a cockpit area of a vehicle; receiving a first reflection wave corresponding to the first transmit wave; determining existence information and location information of a living body in the cockpit area based on the first reflection wave; and transmitting, to a first area in which the living body is located, a second transmit wave when the existence information indicates that the living body exists in the cockpit area, where a power of the second transmit wave is higher than a power of the first transmit wave, and the first area in which the living body is located is determined based on the location information of the living body.

The second transmit wave may be transmitted once at a first frequency at intervals of N seconds, and the first transmit wave may be transmitted once at the first frequency at intervals of M seconds, where M is greater than N. For example, the second transmit wave may be transmitted once at a frequency of 60 GHz (GHz) at intervals of 1 second, and the first transmit wave may be transmitted once at the frequency of 60 GHz at intervals of 10 seconds.

Whether the living body appears in the cockpit area of the vehicle can be detected by transmitting the first transmit wave into the cockpit and obtaining the first reflection wave of the first transmit wave. The second transmit wave whose power is higher than the power of the first transmit wave is transmitted, so that monitoring in the cockpit with different precision can be implemented, and power consumption of a detection apparatus can be effectively reduced. When it is detected that the living body appears in the cockpit area, the second transmit wave is transmitted to the first area, so that interference caused by the transmit wave being transmitted to another obstacle in a cockpit environment can be prevented. This improves detection precision.

In a possible implementation, the transmitting, to a first area in which the living body is located, a second transmit wave when the existence information indicates that the living body exists in the cockpit area specifically includes: obtaining category information of the living body when the existence information indicates that the living body exists; and transmitting the second transmit wave to the first area when the category information indicates that the living body is a human.

In a possible implementation, the obtaining category information of the living body specifically includes: obtaining image information of the living body; and determining the category information of the living body based on the image information.

In a possible implementation, the category information of the living body may be determined based on the image information in an image recognition manner.

In a possible implementation, when the category information indicates that the living body is the human, the method further includes: obtaining image information of the human; determining an identity of the human based on the image information; and adjusting a cockpit environment based on a preset driving preference corresponding to the identity, where the preset driving preference includes one or more of the following: a tilt angle of a seat backrest, a location of a seat cushion relative to a cockpit floor, speaker volume, content played by a player, and an air conditioner temperature.

According to the foregoing setting, the preset driving preference of the human can be adjusted based on the identity of the human after the identity of the human is determined. For example, a seat backrest is adjusted based on a preset tilt angle of the seat backrest, so that the seat backrest is more suitable for a user of the identity; and a corresponding song can be played based on preset player content, to provide the user a better cockpit experience.

In a possible implementation, the transmitting, to a first area in which the living body is located, a second transmit wave when the existence information indicates that the living body exists in the cockpit area specifically includes: obtaining a selection instruction of a user when the existence information indicates that a plurality of living bodies exist, where the first area is determined according to the selection instruction of the user; and transmitting the second transmit wave to the first area indicated by the selection instruction.

According to the foregoing setting, an area for transmitting the second transmit wave can be determined based on selection of the user. For example, when a baby and a pet sitting in a rear-row seat, the user may select to transmit the second transmit wave to an area of a seat in which the baby is located. In this way, when the user temporarily leaves a cockpit, the second transmit wave is selectively transmitted to the area of the seat in which the baby is located, to detect the baby in the cockpit, and ensure safety of the baby.

In a possible implementation, before the transmitting, to a first area in which the living body is located, a second transmit wave after the existence information indicates that the living body exists in the cockpit area, the method further includes: increasing the power of the first transmit wave; transmitting, to the cockpit area of the vehicle, a first transmit wave whose power is increased; receiving a first reflection wave of the first transmit wave whose power is increased; and updating a location of the living body based on the first reflection wave of the first transmit wave whose power is increased.

According to the foregoing setting, detection precision of the first transmit wave can be improved, to improve precision of a location of the living body, and prevent the second transmit wave from being transmitted to another location outside the living body.

In a possible implementation, the method further includes: receiving a second reflection wave corresponding to the second transmit wave; and updating the location information of the living body based on the second reflection wave and the location information that is of the living body and that is determined based on the first reflection wave.

According to the foregoing setting, a location of the living body can be tracked, to prevent a case in which the living body cannot be detected by using the second transmit wave due to movement of the living body.

In a possible implementation, the method further includes: predicting a location of the living body based on the second reflection wave; and transmitting the second transmit wave to a second area based on the predicted location of the living body, where the second area is an area of the predicted location of the living body.

According to the foregoing setting, a location of the living body can be predicted, to prevent a case in which the living body cannot be detected by using the second transmit wave due to movement of the living body.

In a possible implementation, the first area is an area of a seat in which the location of the living body is located.

In a possible implementation, the second transmit wave is transmitted to an area of a driver seat when the living body exists in the area of the driver seat.

According to the foregoing setting, when the plurality of living bodies exist in a cockpit, priority detection can be implemented on a living body on a driver seat, to improve driving safety.

In a possible implementation, the living body further includes: an animal.

In a possible implementation, the location of the living body is used to determine depth information of the living body, an air exhaust direction of an air conditioner, a sound output direction of a speaker, a light illumination direction, and a shooting direction of a camera.

According to the foregoing disposing, the air exhaust direction of the air conditioner, the sound output direction of the speaker, the light illumination direction, and the shooting direction of the camera can point to a location of the living body, to improve user experience.

According to a second aspect of embodiments of this application, a detection apparatus is provided, including: a transceiver module, configured to transmit a first transmit wave to a cockpit area of a vehicle, where the transceiver module is further configured to receive a first reflection wave corresponding to the first transmit wave; and a processing module, configured to determine existence information and location information of a living body in the cockpit area based on the first reflection wave, where the transceiver module is further configured to: transmit, to a first area in which the living body is located, a second transmit wave when the existence information indicates that the living body exists in the cockpit area, where a power of the second transmit wave is higher than a power of the first transmit wave, and the first area in which the living body is located is determined based on the location information of the living body.

In a possible implementation, the transceiver module is specifically configured to: obtain category information of the living body when the existence information indicates that the living body exists; and transmit the second transmit wave to the first area when the category information indicates that the living body is a human.

In a possible implementation, the transceiver module is specifically configured to: obtain image information of the living body; and
determine the category information of the living body based on the image information.

In a possible implementation, the category information of the living body may be determined based on the image information in an image recognition manner.

In a possible implementation, the transceiver module is further specifically configured to: when the category information indicates that the living body is the human, obtain image information of the human; determine an identity of the human based on the image information; and adjust a cockpit environment based on a preset driving preference corresponding to the identity, where the preset driving preference includes one or more of the following: a tilt angle of a seat backrest, a location of a seat cushion relative to a cockpit floor, speaker volume, content played by a player, and an air conditioner temperature.

In a possible implementation, the transceiver module is specifically configured to: obtain a selection instruction of a user when the existence information indicates that a plurality of living bodies exist, where the first area is determined according to the selection instruction of the user; and transmit the second transmit wave to the first area indicated by the selection instruction.

In a possible implementation, the transceiver module is further configured to: after the existence information indicates that the living body exists in the cockpit area, and before the second transmit wave is transmitted to the first area in which the living body is located, increase the power of the first transmit wave; transmit, to the cockpit area of the vehicle, a first transmit wave whose power is increased; receive a first reflection wave of the first transmit wave whose power is increased; and update a location of the living body based on the first reflection wave of the first transmit wave whose power is increased.

In a possible implementation, the transceiver module is further configured to receive a second reflection wave corresponding to the second transmit wave; and the processing module is further configured to update the location information of the living body based on the second reflection wave and the location information that is of the living body and that is determined based on the first reflection wave.

In a possible implementation, the processing module is further configured to predict a location of the living body based on the second reflection wave; and the transceiver module is further configured to transmit the second transmit wave to a second area based on the predicted location of the living body, where the second area is an area of the predicted location of the living body.

In a possible implementation, the first area is an area of a seat in which the location of the living body is located.

In a possible implementation, the transceiver module is specifically configured to: transmit the second transmit wave to an area of a driver seat when the living body exists in the area of the driver seat.

In a possible implementation, the living body further includes: an animal.

In a possible implementation, the location of the living body is used to determine depth information of the living body, an air exhaust direction of an air conditioner, a sound output direction of a speaker, a light illumination direction, and a shooting direction of a camera.

Technical effects brought by the detection apparatus provided in any one of the second aspect of this application and the possible implementations of the second aspect are the same as technical effects brought by the detection method provided in any one of the first aspect of this application and the possible implementations of the first aspect. For brevity, details are not described herein again.

According to a third aspect of embodiments of this application, a radar is provided, including the detection apparatus provided in the second aspect of embodiments of this application and the possible implementations of the second aspect and an antenna.

According to a fourth aspect of embodiments of this application, a computer-readable storage medium is provided. The computer-readable storage medium stores program code. When the program code is executed by a terminal or a processor in a terminal, the detection method provided in the first aspect of embodiments of this application and the possible implementations of the first aspect is implemented.

According to a fifth aspect of embodiments of this application, a computer program product is provided. When the computer program product runs on a computer, the detection method provided in the first aspect of embodiments of this application and the possible implementations of the first aspect is implemented.

A sixth aspect of embodiments of this application provides a vehicle, including the detection apparatus provided in the second aspect of embodiments of this application and the possible implementations of the second aspect and an antenna.

The first transmit wave is transmitted into the cockpit area of the vehicle, so that detection in the cockpit area can be implemented. When it is determined, based on the reflection wave of the first transmit wave, that the living body appears in the cockpit, the second transmit wave whose power is higher is transmitted to the first area in which the living body is located. This can prevent interference caused by the transmit wave being transmitted to another obstacle in the cockpit environment, and improve detection precision of the living body.

In addition, when a plurality of living bodies are detected in the cockpit, an area in which the second transmit wave is transmitted can be determined based on selection of the user, and user experience is improved; and the second transmit wave can also be transmitted to an area of the driver seat, and driving safety is improved.

The location of the living body can be tracked based on the location of the living body obtained based on the second reflection wave of the second transmit wave, to prevent a case in which the living body cannot be detected by using the second transmit wave due to movement of the living body. In addition, the air exhaust direction of the air conditioner, the sound output direction of the speaker, the light illumination direction, and the shooting direction of the camera can be used to point to the location of the living body, to improve user experience.

### BRIEF DESCRIPTION OF DRAWINGS

FIG. 1 is a schematic diagram of an application scenario of a detection method based on a radar system according to an embodiment of this application;
FIG. 2 is a schematic diagram of a structure of a radar system used in a detection solution of this application;
FIG. 3 is a flowchart of a detection method based on a radar system according to an embodiment of this application;
FIG. 4 is a flowchart of a detection method based on a radar system according to another embodiment of this application;
FIG. 5 is a relationship diagram of processing of corresponding dot tracks and travelling tracks in different statuses of the travelling tracks and statuses of the travelling tracks obtained after the processing according to an embodiment of this application;
FIG. 6 is a diagram of antenna distribution of a radar system according to an embodiment of this application;
FIG. 7 is a schematic diagram of modules of a detection apparatus based on a radar system according to an embodiment of this application; and
FIG. 8 is a schematic diagram of a computing device according to an embodiment of this application.

### DESCRIPTION OF EMBODIMENTS

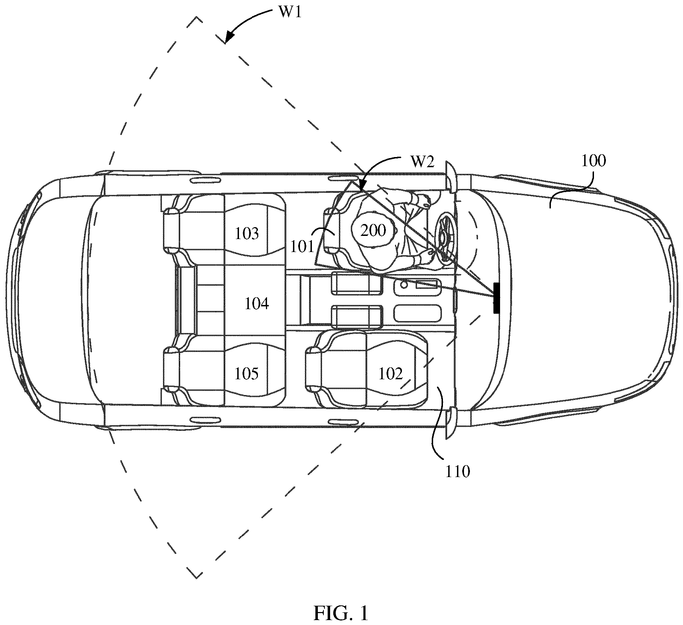

FIG. 1 is a schematic diagram of an application scenario of a detection method according to an embodiment of this application. As shown in FIG. 1, the detection method may be used in a cockpit 110 of a vehicle 100, and is used to detect a vital sign of a passenger. Specifically, a millimeter-wave radar system generates a transmit wave to the cockpit 110, and detects vital sign information of the passenger based on a reflection wave of the transmit wave. A detection method based on a radar system according to an embodiment of this application may be used in the cockpit 110 of the vehicle 100. A first transmit wave W1 is transmitted into the cockpit 110 to detect whether a human body exists in the cockpit 110. After it is detected that a human body 200 exists in the cockpit 110, a second transmit wave W2 is transmitted to a location of the human body 200, to detect vital sign information of the human body 200. The first transmit wave W1 may be transmitted by a first antenna, and the second transmit wave W2 may be transmitted by a second antenna.

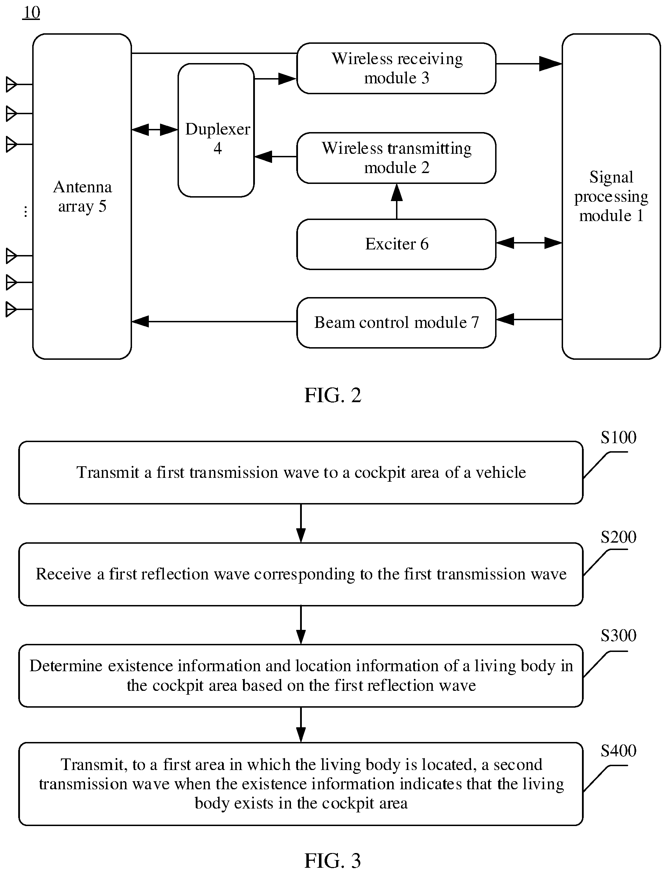

FIG. 2 is a schematic diagram of a structure of a radar system 10 used in a detection solution (including a detection method, apparatus, and the like) of this application. As shown in FIG. 2, the radar system 10 is a phased array millimeter-wave radar system, and has a signal processing module 1, a wireless transmitting module 2, a wireless receiving module 3, a duplexer 4, an antenna array 5, an exciter 6, and a beam control module 7. The exciter 6 is configured to generate a radio frequency signal that meets a specific requirement. The wireless transmitting module 2 is mainly configured to: generate a high-power radio frequency signal based on the radio frequency signal generated by the exciter 6, and transmit the radio frequency signal to the antenna array 5. The antenna array 5 is configured to: transmit an electromagnetic wave (referred to as a transmit wave) used for scanning to space, and receive an electromagnetic wave (referred to as a reflection wave) reflected by a target. In addition, the wireless receiving module 3 is mainly configured to perform processing like amplification on the received reflection wave, to further perform signal processing and data processing. The signal processing module 1 is configured to perform processing based on the reflection wave, for example, perform target detection based on a reflection wave of a single scan, and obtain a travelling track of a target (namely, a target motion track) based on reflection waves of a plurality of scans. Through these processing, a location, a speed, and a track of the target can be obtained. In addition, for example, the signal processing module 1 is further configured to indicate the beam control module 7 to calculate and control a phase shift value of each phase shifter in the antenna array 5, so that the transmit wave transmitted by the antenna array 5 searches for or tracks a target based on a specified area.

The radar system 10 described above is merely a system embodiment in which a vital sign detection solution in embodiments of this application is used. In addition, the detection solution in embodiments of this application may be further used in another type of radar system, for example, a mechanical scanning radar, a digital array radar, or a frequency scanning radar.

FIG. 3 is a flowchart of a detection method based on a radar system according to an embodiment of this application. The detection method based on the radar system provided in this embodiment of this application may be performed by a terminal, for example, a terminal like a smart vehicle or a terminal like a radar system, or may be an electronic apparatus used in a terminal, for example, a system chip or a general-purpose chip.

As shown in FIG. 3, this embodiment of this application provides the detection method based on the radar system may include the following steps.

Step S 100: Transmit a first transmit wave to a cockpit area of a vehicle.

In some embodiments, the first transmit wave may be transmitted by an antenna array, and a transmit frequency of the first transmit wave may be that, for example, the first transmit wave is transmitted to the cockpit area of the vehicle once at intervals of 5 seconds to 20 seconds. The transmit frequency may be a fixed frequency, or may be a non-fixed frequency.

Because a transmit power of the first transmit wave is low (for example, the first transmit wave is transmitted to the cockpit area of the vehicle once at intervals of 5 seconds to 20 seconds at a frequency of 60 GHz), power consumption of the radar system is low. In step S 100, a long-term detection of the cockpit area can be implemented. For example, detection is performed 24 hours a day or detection is performed during power-on of a vehicle (for example, detection is performed on a living body of a cockpit when a driver temporarily leaves the cockpit due to refueling or shopping).

Step S200: Receive a first reflection wave corresponding to the first transmit wave.

A processor may receive the first reflection wave by using the antenna array of the radar system, and then the processor may perform processing like amplification on the received first reflection wave by using a wireless receiving module, so that the processor performs signal processing and data processing.

Step S300: Determine existence information and location information of a living body in the cockpit area based on the first reflection wave.

The living body may include a human and an animal. The existence information of the living body in the cockpit area may be determined based on the first reflection wave, for example, by using an algorithm like a static object elimination algorithm, a multipath interference elimination algorithm, a group target tracking algorithm, or a human and non-human object classification algorithm. The location information of the living body may include a distance and an angle of the living body relative to the antenna array of the radar system. For example, a distance of a target relative to the antenna array of the radar system may be determined based on the first reflection wave by using a pulse method, a frequency modulation method, or the like; and an angle of the target relative to an antenna of the radar system may be measured by using a phase method or an amplitude method.

In some embodiments, the location information of the living body may be used to determine depth information of the living body, an air exhaust direction of an air conditioner, a sound output direction of a speaker, a light illumination direction, and a shooting direction of a camera.

When a location of the living body is determined, the air exhaust direction of the air conditioner, the sound output direction of the speaker, the light illumination direction, and the shooting direction of the camera may be further controlled, so that these directions point to the position of the living body. This provides a better cockpit experience for a user.

Step S400 is performed: Transmit, to a first area in which the living body is located, a second transmit wave when the existence information indicates that the living body exists in the cockpit area.

A power of the second transmit wave is higher than a power of the first transmit wave. For example, a transmit frequency of the second transmit wave may be that the second transmit wave is transmitted to the first area in which the living body is located once at intervals of 1 second to 5 seconds. The transmit frequency may be a fixed frequency, or may be a non-fixed frequency. The first area in which the living body is located is determined based on the location information of the living body.

In some embodiments, a value of the power of the transmit wave may be reflected in an interval between two adjacent transmit waves. Specifically, the second transmit wave may be transmitted once at a first frequency at intervals of N seconds, and the first transmit wave may be transmitted once at the first frequency at intervals of M seconds, where M is greater than N.

When the existence information indicates that there is no living body in the cockpit area, step S100 to step S300 are performed again.

In some embodiments, the second transmit wave may be transmitted by the antenna array. The second transmit wave and the first transmit wave may be generated by a same antenna, or may be generated by different antennas. When the first transmit wave and the second transmit wave are generated by different antennas, the antenna array may include a plurality of antenna array planes, and each antenna array plane includes a plurality of antennas, so that independent transmit beams can be formed; or antennas in a same antenna array plane may be grouped, so that different antenna groups are used to generate the first transmit wave and the second transmit wave respectively.

In some embodiments, step S400 may specifically include: obtaining category information of the living body when the existence information indicates that the living body exists; and transmitting the second transmit wave to the first area when the category information indicates that the living body is a human.

An image of the cockpit may be captured by a camera, and then the category information of the living body in the cockpit is determined in an image recognition manner. For example, a type of the living body in the image may be determined in an image recognition manner or the like. This is not limited in this application.

In some embodiments, when the category information indicates that the living body is the human, the method further includes: obtaining image information of the human; determining an identity of the human based on the image information; and adjusting a cockpit environment based on a preset driving preference corresponding to the identity, where the preset driving preference includes one or more of the following: a tilt angle of a seat backrest, a location of a seat cushion relative to a cockpit floor, speaker volume, content played by a player, and an air conditioner temperature.

According to the foregoing setting, the preset driving preference of the human can be adjusted based on the identity of the human after the identity of the human is determined. For example, a seat backrest is adjusted based on a preset tilt angle of the seat backrest, so that the seat backrest is more suitable for a user of the identity; and a corresponding song can be played based on preset player content, to provide the user a better cockpit experience.

The camera may capture an image of the human, and then the identity of the human may be determined in an image recognition manner, or the identity of the human may be determined based on fingerprint information, voiceprint information, or the like. The preset driving preference may be preset based on the identity of the user.

In some embodiments, the first area is an area of a seat in which the location of the living body is located.

As shown in FIG. 1, the first area may include, for example, an area in which a driver seat 101, a front seat 102, a rear-row first seat 103, a rear-row second seat 104, and a rear-row third seat 105 are located. When living bodies are located in a plurality of seats, for example, the living bodies are located in the rear-row first seat 103 and the rear-row second seat 104, a unique seat may be determined based on proportions of the living bodies located in the two seats, or a seat may be randomly selected. For example, the rear-row first seat 103 may be randomly selected as an area in which a human is located.

In some embodiments, when the existence information indicates that a living body exists in the cockpit area, step S400 specifically includes: obtaining a selection instruction of the user when the existence information indicates that a plurality of living bodies exist, where the first area is determined according to the selection instruction of the user; and transmitting the second transmit wave to the first area indicated by the selection instruction.

In some embodiments, as shown in FIG. 1, when there are passengers in both the driver seat and the front seat, for example, as shown in FIG. 1, when it is detected that there are passengers in both an area in which the driver seat 101 is located and an area in which the front seat 102 is located, an interface of the first area for the user to select the second transmit wave for transmitting may be displayed on a central control screen, or a voice of the first area for the user to select the second transmit wave for transmitting may be sent. The user may select, by touching the central control screen or sending a voice instruction, the first area in which the user intends to transmit the second transmit wave. For example, when the user sends a selection instruction: Please transmit the second transmit wave to the driver seat 101. The selection instruction may be obtained through a microphone, and the instruction of the user is determined in a voice recognition manner. Further, the second transmit wave is transmitted to the driver seat 101.

In some embodiments, when the living body exists in an area of the driver seat, the second transmit wave is transmitted to the area of the driver seat.

The living body located in the driver seat can perform a driving operation. When it is detected that a plurality of living bodies exist in the cockpit and a living body exists in the area of the driver seat, the second transmit wave may be transmitted to the living body located in the driver seat, so that the living body of the driver seat is detected. This ensures driving safety and improve safety of a vehicle.

In some embodiments, after the existence information indicates that the living body exists in the cockpit area, before the second transmit wave is transmitted to the first area in which the living body is located, the method further includes: increasing the power of the first transmit wave; transmitting, to the cockpit area of the vehicle, a first transmit wave whose power is increased; receiving a first reflection wave of the first transmit wave whose power is increased; and updating a location of the living body based on the first reflection wave of the first transmit wave whose power is increased.

In step S100, the power of the first transmit wave is low, and accuracy of the location information of the living body obtained based on the reflection wave of the first transmit wave is not high. Therefore, after it is detected that the living body exists in the cockpit area, the power of the first transmit wave may be increased, and a location of the living body with high accuracy is obtained based on a reflection wave of a first transmit wave whose power is increased.

In some embodiments, the method further includes: receiving a second reflection wave corresponding to the second transmit wave; and updating the location information of the living body based on the second reflection wave and the location information that is of the living body and that is determined based on the first reflection wave.

Because the living body in the cockpit may move, a location of the living body may be tracked in real time, and the location information of the living body is determined in real time based on the reflection wave of the second transmit wave.

In some embodiments, the method further includes: predicting a location of the living body based on the reflection wave of the second transmit wave; and transmitting, based on the predicted location of the living body, the second transmit wave to a first area of the predicted location of the living body.

When a moving range of a target at former and latter moments is large (for example, the target moves from the rear-row first seat 103 to the rear-row third seat 105) and a beam range of the second transmit wave is small, it is possible that location information of a human cannot be detected by using the second transmit wave. As a result, vital sign information of the human cannot be detected. To avoid occurrence of the foregoing situation, the reflection wave obtained through detection needs to be processed to predict the location of the living body.

For example, a plurality of dot tracks from a same living body may be aggregated into one dot track, and then the dot tracks of the same living body in a plurality of detection periodicities are associated, to generate a travelling track of the living body to predict a location of the living body. This implements tracking of the living body.

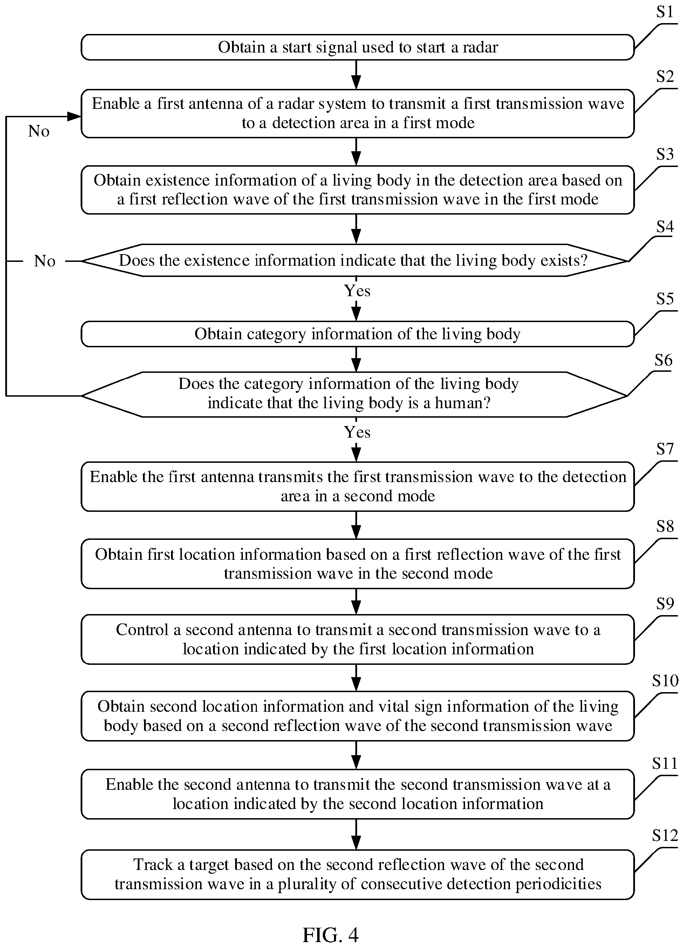

FIG. 4 is a flowchart of a detection method based on a radar system according to an embodiment of this application. As shown in FIG. 4, the detection method based on the radar system provided in this embodiment of this application includes the following steps.

Step S 1: Obtain a start signal used to start the radar system.

The start signal may include one or more of the following: a sensor signal and an in-vehicle network signal, for example, a controller area network (controller area network, CAN) signal. The sensor signal may be a signal directly obtained by sensors (for example, a seat pressure sensor, a throttle pedal travel sensor, a camera, a microphone, and a start button), or may be a signal obtained through processing of a signal obtained by a sensor (for example, a signal obtained through processing of an image obtained by a camera sensor, or a signal obtained through processing of a voice obtained through a microphone). This is not limited in this application.

In some embodiments, the sensor signal may include a seat pressure signal, a throttle pedal travel signal, a camera signal, a microphone signal, a start button signal, and the like.

In some embodiments, the in-vehicle network signal may include a vehicle door opening/closing signal, a gear signal, a seat belt fastening signal, and the like.

In some embodiments, when seat pressure exceeds a threshold, it indicates that a passenger has entered a vehicle cockpit and sits on a seat, and the radar system is started. When travel of a throttle pedal exceeds a threshold, it indicates that a driver has entered the vehicle cockpit and is driving the vehicle, and the radar system is started. When it is recognized that a human exists in an image obtained by the camera sensor, it indicates that the passenger has entered the cockpit, and the radar system is started. When a voiceprint in a voice obtained by the microphone is recognized as a voiceprint of a human, or an instruction in a voice indicates to start the radar system, it indicates that the passenger intends to start the radar system. In this case, the radar system is controlled to start. When the start button signal is obtained, it indicates that the passenger intends to start the radar system. In this case, the radar system is controlled to start.

In some embodiments, when a vehicle door is switched from a closed state to an open state, it indicates that the passenger is about to enter or has entered the vehicle cockpit, and the radar system is started. When the gear signal changes, it indicates that the passenger has entered the vehicle cockpit, and the radar system is started. When a seat belt signal indicates that a seat belt is fastened, it indicates that the passenger is already in the cockpit, and the radar system is started.

Step S2: Enable a first antenna of the radar system to transmit a first transmit wave to a detection area in a first mode.

In some embodiments, as shown in FIG. 1, the detection area may be an area of the cockpit 110 of the vehicle; and the radar system may be, for example, located at a switch location of a dome light at a ceiling of the cockpit 110 of the vehicle close to a front windshield.

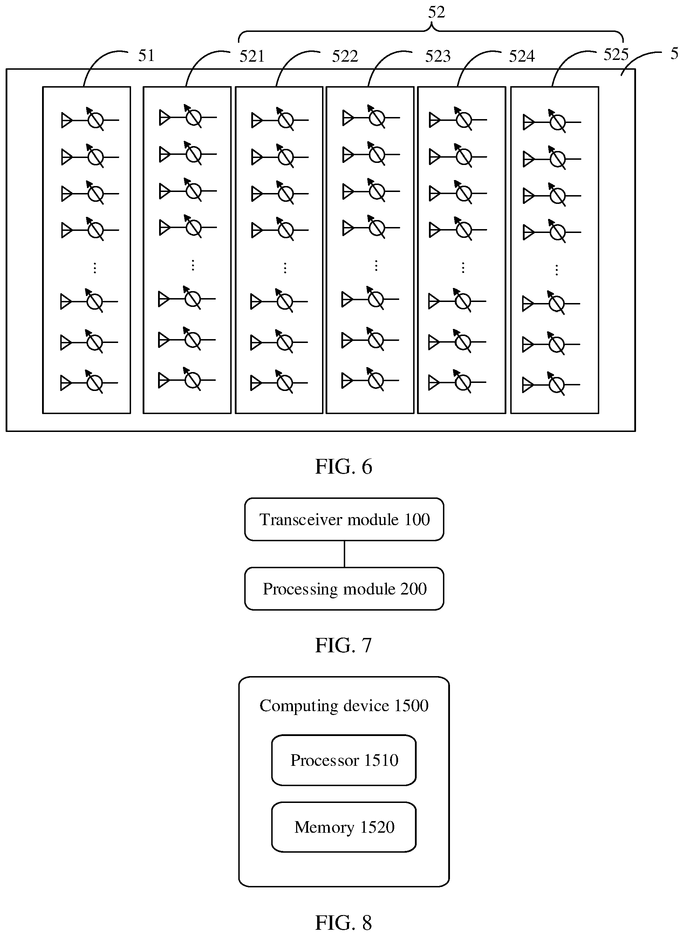

In some embodiments, as shown in FIG. 6, the antenna array 5 of the radar system may include a first antenna 51 and a second antenna 52. The first antenna 51 may transmit a first transmit wave to a first preset area at a first preset power. The second antenna 52 may transmit a second transmit wave to a second preset area at a second preset power. The second antenna 52 may include: a first area antenna group 521, a second area antenna group 522, a third area antenna group 523, a fourth area antenna group 524, and a fifth area antenna group 525. As shown in FIG. 1, these antenna groups 521 to 525 may separately transmit the second transmit wave to the driver seat 101, the front seat 102, the rear-row first seat 103, the rear-row second seat 104, and the rear-row third seat 105. In the first mode, the first antenna 51 transmits the first transmit wave once at intervals of first time. The first transmit wave may be a first frequency. For example, the first antenna 51 may transmit the first transmit wave once at intervals of 10 seconds to 20 seconds. The first frequency may be, for example, 60 GHz, and a coverage area of the first transmit wave is the cockpit area. In step S2, because the second antenna 52 does not work, the radar system is in a low power consumption state.

It should be noted that, when there is no passenger in the cockpit, that is, no start signal is received, the radar system may also be started, so that the first antenna of the radar system transmits the first transmit wave to the detection area in the first mode. This implements a "sentinel" function, and whether a living body exists in the cockpit is detected.

Step S3: Obtain existence information of the living body in the detection area based on a first reflection wave of the first transmit wave in the first mode.

For example, whether the living body exists in the detection area may be determined based on the first reflection wave by using an algorithm like a static object elimination algorithm, a multipath interference elimination algorithm, a group target tracking algorithm, or a human and non-human object classification algorithm. The living body may include a human and an animal.

It can be learned from step S2 that, in the first mode, the first antenna 51 transmits the first transmit wave once at intervals of first time, and the first transmit wave may be the first frequency. In this case, the first reflection wave of the first transmit wave in the first mode may be used to determine whether the living body exists in the detection area and a location of the living body in the detection area.

Step S4: Determine whether the existence information indicates that the living body exists.

When the existence information indicates that the living body does not exist, a subsequent step like step S2 continues to be performed, to detect whether the living body exists in the cockpit at any time.

When the existence information indicates that the living body exists, step S5 is performed: Obtain category information of the living body.

In some embodiments, when the existence information indicates that the living body exists, an image in the cockpit may be captured by a camera, and then the category information of the living body in the cockpit is determined in an image recognition manner. A type of the living body in the image may be determined in an image recognition manner or the like. This is not limited in this application. The category information of the living body may include a human, an animal, and the like.

Step S6: Determine whether the category information of the living body indicates that the living body is a human.

When the category information of the living body indicates that the living body is not the human, a subsequent step like step S2 is performed again, to detect whether the living body exists in the cockpit.

When the category information of the living body indicates that the living body is the human, step S7 is performed, so that the first antenna transmits the first transmit wave to the detection area in a second mode.

In the second mode, the first antenna may transmit the first transmit wave once at intervals of second time, and the first transmit wave may be the first frequency. For example, in the second mode, the first antenna may transmit the first transmit wave once at intervals of 5 seconds to 10 seconds, and the first frequency may be 60 GHz. When it is detected that the living body is the human, an interval between two adjacent first transmit waves may be shortened to improve detection precision of a radar.

In some embodiments, an interval between transmitting of two adjacent first transmit waves may also be shortened in an external input manner, to improve detection precision of the radar system. For example, a user may send a voice instruction (for example, increasing scanning precision or increasing a scanning power) used to adjust a transmitting mode of an antenna. After a microphone obtains the voice instruction, the voice instruction may be recognized in a voice recognition manner, to adjust a transmitting mode of the first antenna. Alternatively, the transmitting mode of the first antenna may be adjusted when a signal indicating that a vehicle door is opened from the outside is obtained. Alternatively, the transmitting mode of the first antenna may be adjusted based on a pressure signal (for example, a pressure value is greater than a threshold) of the seat pressure sensor.

Step S8: Obtain first location information based on a reflection wave of the first transmit wave in the second mode.

The first location information may include a distance and an angle of a target (referred to as a human) relative to the antenna array of the radar system. For example, the distance of the target relative to the antenna array of the radar system may be determined by using a pulse method, a frequency modulation method, or the like. The angle of the target relative to an antenna of the radar system may be measured by using a phase method or an amplitude method.

Step S9: Control a second antenna to transmit a second transmit wave to a location indicated by the first location information.

The second antenna may transmit the transmit wave once at intervals of third time, and the second transmit wave may be the first frequency. For example, the second antenna may transmit the second transmit wave once at intervals of 1 second to 5 seconds, and the first frequency may be 60 GHz.

In some embodiments, the first area antenna group may transmit a beam to a driver seat within an angle range of a first preset area; the second area antenna group may transmit a beam to a front seat within an angle range of a second preset area; the third area antenna group may transmit a beam to a rear-row first seat within an angle range of a third preset area; the fourth area antenna group may transmit a beam to a rear-row second seat within an angle range of a fourth preset area; and the fifth area antenna group may transmit a beam to a rear-row third seat within the angle range of the third preset area.

For related parameters of the first transmit wave and the second transmit wave, refer to Table 1. It should be understood that a parameter value herein is merely used as an example, or may be another value. This is not limited in this embodiment of this application.

**Table 1**

| Transmit wave parameter | First transmit wave | Second transmit wave |
|---|---|---|
| Type of the transmit wave | | |
| Frequency | 60GHz | 60GHz |
| Transmitting area | Cockpit area | First area |
| | | a driver seat 101, a front seat 102, a rear-row first seat 103, a rear-row second seat 104, and a rear-row third seat 105) |
| Transmit antenna | First antenna 51 | Second antenna 52 (a first area antenna group 521, a second area antenna group 522, a third area antenna group 523, a fourth area antenna group 524, and a fifth area antenna group 525) |
| Interval of transmitting | Transmit once at intervals of 5 seconds to 20 seconds | |
| | | Transmit once at intervals of 1 second to 5 seconds |

In some embodiments, as shown in FIG. 1, when a location indicated by first location information of a detected target is in an area in which the driver seat 101 is located, the first area antenna group 521 of the second antenna 52 is enabled to transmit the second transmit wave to the driver seat 101 within an angle range of the first preset area based on the first area antenna group 521 corresponding to the driver seat 101. When the location indicated by the first location information of the detected target is at the front seat 102, the second area antenna group 522 is enabled to transmit the second transmit wave to the front seat 102 within an angle range of the second preset area based on the second area antenna group 522 corresponding to the front seat 102, and so on.

In some embodiments, when it is detected that a plurality of targets exist in the cockpit, a plurality of antenna groups may be controlled to simultaneously transmit a beam based on locations indicated by first location information of the plurality of targets. For example, as shown in FIG. 1, when it is detected that there are targets in both an area in which the driver seat 101 is located and an area in which the front seat 102 is located, the first area antenna group 521 may be controlled to transmit a beam to the driver seat 101 within an angle range of the first preset area, and the second area antenna group 522 is controlled to transmit a beam to the front seat 102 within an angle range of the second preset area.

In some embodiments, when locations indicated by first location information of detected targets are at a plurality of seats, for example, the targets are located in the rear-row first seat 103 and the rear-row second seat 104, a unique seat may be determined based on proportions of the locations indicated by the first location information in the plurality of seats, or a seat may be randomly selected. For example, an area in which the rear-row first seat 103 is located may be randomly selected as an area in which a human is located, and the second transmit wave is transmitted based on the third area antenna group 523 corresponding to the rear-row first seat.

It should be noted that, transmitting of the first antenna and the second antenna may be further controlled based on external input information. For example, when a signal indicating that a rear-row door close to the rear-row first seat 103 is opened from the outside is obtained, the third area antenna group 523 of the second antenna may be started to transmit the second transmit wave to the rear-row first seat 103. Alternatively, when pressure of a pressure signal of the rear close to the rear-row first seat 103 exceeds a threshold, the third area antenna group 523 of the second antenna may be started to transmit the second transmit wave to the rear-row first seat 103.

Step S 10: Obtain second location information and vital sign information of the living body based on a reflection wave of the second transmit wave.

Because a human in the cockpit may move, a location of the human may be updated and tracked in real time, and location information of the living body is determined in real time based on the reflection wave of the second transmit wave. The second location information is the same as the first location information, and may include a distance and an angle of a target relative to the antenna array of the radar system. The distance of the target relative to the antenna array of the radar system may be determined by using a pulse method, a frequency modulation method, or the like. The angle of the target relative to an antenna of the radar system may be measured by using a phase method or an amplitude method.

The vital sign information of the living body includes, for example, heart rate information and breathing frequency information.

Step S11: Enable the second antenna to transmit the second transmit wave at a location indicated by the second location information.

Steps S10 and S 11 are repeated, so that the location information and the vital sign information of the target in the cockpit can be obtained in real time, to detect a location and a vital sign of the target.

Step S12: Track the target based on the reflection wave of the second transmit wave in a plurality of consecutive detection periodicities.

When a volume of the target is excessively large or movement speeds of parts of the target are different, the same target may have a plurality of detection results. Alternatively, when a moving range of the target at former and latter moments is large (for example, the target moves from the rear-row first seat 103 to the rear-row third seat 105) and a beam range of the second transmit wave is small, it is possible that location information of a human cannot be detected by using the second transmit wave. As a result, vital sign information of the human cannot be detected. To avoid the foregoing case, the reflection wave obtained through detection needs to be processed. A plurality of dot tracks from a same target are aggregated into one dot track, and then the dot tracks of the same target in a plurality of detection periodicities are associated, to generate a travelling track of the target to predict a location of the target. This implements tracking of the target. Dot track information may include a slant range, a radial velocity, a pitch angle, and the like of the target. For example, the slant range may be determined by using a pulse method or a frequency modulation method, and the pitch angle may be determined by using a phase method or an amplitude method.

Before the travelling track is established, because the dot track obtained through detection has no associated travelling track, it may be considered that the dot track is related to any dot track obtained through previous detection. If a distance between the dot track and a dot track obtained through previous detection is less than a displacement amount caused by a maximum speed of the target, a temporary travelling track may be generated by the two dot tracks. If dot tracks obtained through m times of next n times of detection is related to the travelling track, it may be determined that the travelling track is established. After the travelling track is established, a dot track obtained through subsequent detection is associated with the established travelling track by using a related wave gate. A dot track associated with a travelling track is considered as a target corresponding to the travelling track. Smooth filtering and prediction extrapolation processing are performed on dot track data to update the travelling track, and a location of a wave gate that may appear in a next dot track is adjusted. This process continues, that is, target tracking is implemented.

In some embodiments, a mode of the first antenna may be further adjusted based on a status of the travelling track.

When a dot track obtained based on the second reflection wave of the second transmit wave subsequently transmitted by the second antenna can be associated with an existing travelling track, it indicates that the status of the travelling track is stable. In this case, a target in the cockpit remains unchanged, and the first antenna in the second mode may be controlled to switch to the first mode, to reduce power consumption.

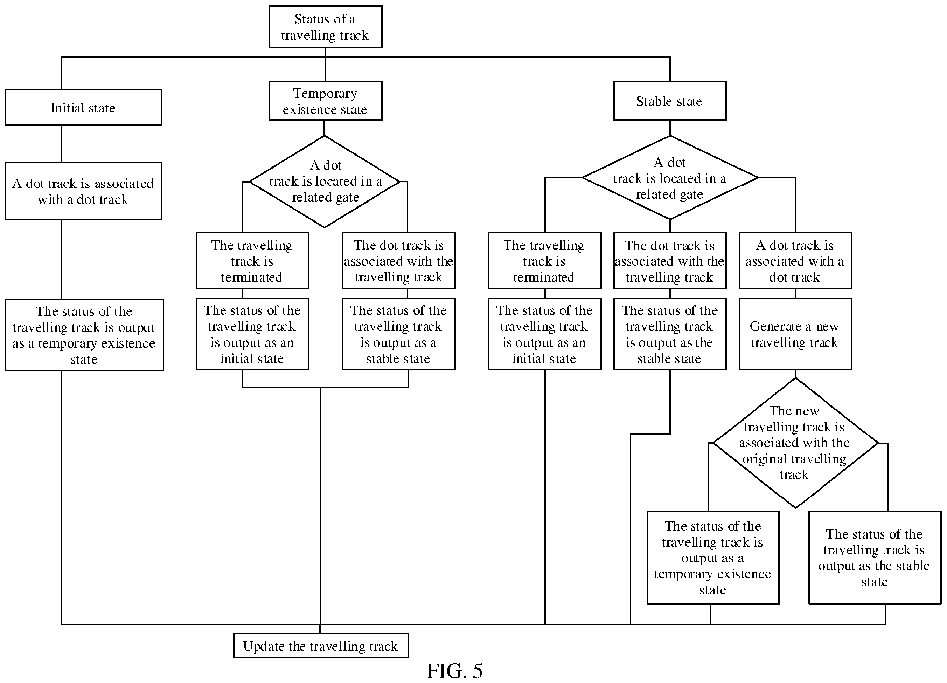

FIG. 5 shows processing of corresponding dot tracks and travelling tracks in different statuses of the travelling tracks and statuses of the travelling tracks obtained after the processing.

In some embodiments, as shown in FIG. 5, the statuses of the travelling tracks may be classified into an initial state, a temporary existence state, and a stable state based on whether a travelling track exists and whether a travelling track is associated with a dot track. In the initial state, it indicates that no travelling track of a target is generated; in the temporary state, it indicates that a travelling track of the target is generated; and in the stable state, it indicates that a subsequently obtained dot track is associated with the travelling track. When the status of the travelling track is the stable state, the first antenna may be controlled to transmit a transmit wave in the first mode, to reduce power consumption of the radar system.

In the initial state, association processing may be performed on a plurality of dot tracks determined by reflection waves of the second transmit waves in a plurality of detection periodicities. If a distance between a dot track and a dot track obtained through previous detection is less than a displacement amount caused by a maximum speed of the target, a temporary travelling track may be generated by the two dot tracks. If dot tracks obtained through m times of next n times of detection is related to the travelling track, it may be determined that the travelling track is established. In this case, the status of the travelling track is output as the temporary existence state. In addition, the travelling track is updated by using a plurality of subsequently determined dot tracks, smooth filtering, prediction extrapolation processing, and the like, and a location of a wave gate that may appear in a next dot track is adjusted.

In the temporary existence state, a plurality of dot tracks determined by reflection waves of the second transmit waves in a plurality of detection periodicities may be associated with a travelling track by using a related wave gate. The related wave gate is an area centered on a target prediction location. The area determines a location area in which a next dot track from the target may appear. A size and a property of the location area are determined based on a motion status (a speed, an acceleration, a motion direction, and magnitude of disturbance) of the target. When the dot track is located in the related wave gate, the dot track is associated with the travelling track. In this case, the status of the travelling track is output as the stable state, and the travelling track is updated by using a plurality of subsequently determined dot tracks, smooth filtering, prediction extrapolation processing, and the like, and a location of a wave gate that may appear in a next dot track is adjusted. When a plurality of subsequent dot tracks are not located in the related wave gate, it indicates that the target disappears or the dot tracks cannot be associated with the travelling track. The travelling track is terminated. In this case, the status of the travelling track is output as the initial state, and association processing is performed on the plurality of dot tracks to generate a new travelling track.

In the stable state, a plurality of dot tracks determined by reflection waves of the second transmit waves in a plurality of detection periodicities may be associated with a travelling track by using a related wave gate. When the dot track is located in the related wave gate, the dot track is associated with the travelling track. In this case, the status of the travelling track is output as the stable state and the travelling track is updated. When a plurality of subsequent dot tracks are not located in the related wave gate, it indicates that the target disappears or the dot tracks cannot be associated with the travelling track. The travelling track is terminated. In this case, the status of the travelling track is output as the initial state, and association processing is performed on the plurality of dot tracks to generate a new travelling track. Then, association processing is performed on the new travelling track and the original travelling track. When the new travelling track is associated with the original travelling, it indicates that the target does not change, and the status of the travelling track is output as a stable state. The travelling track is updated by using the plurality of subsequently determined dot tracks, smooth filtering, prediction extrapolation processing, and the like, and a location of a wave gate that may appear in a next dot track is adjusted. When the new travelling track cannot be associated with the original travelling track, it indicates that a new target appears, and the status of the travelling track is output as the temporary existence state, and a new travelling track is added.

FIG. 7 is a schematic diagram of modules of a detection apparatus based on a radar system according to an embodiment of this application. As shown in FIG. 7, the detection apparatus based on the radar system provided in this embodiment of this application includes: a transceiver module 100 and a processing module 200.

The transceiver module 100 is configured to transmit a first transmit wave to a cockpit area of a vehicle. The transceiver module 100 is further configured to receive a first reflection wave corresponding to the first transmit wave. The processing module 200 is configured to determine existence information and location information of a living body in the cockpit area based on the first reflection wave. The transceiver module 100 is further configured to: transmit, to a first area in which the living body is located, a second transmit wave when the existence information indicates that the living body exists in the cockpit area, where a power of the second transmit wave is higher than a power of the first transmit wave, and the first area in which the living body is located is determined based on the location information of the living body.

In some embodiments, the transceiver module 100 is specifically configured to: obtain category information of the living body when the existence information indicates that the living body exists; and transmit the second transmit wave to the first area when the category information indicates that the living body is a human.

In some embodiments, the transceiver module 100 is specifically configured to: obtain image information of the living body; and determine the category information of the living body based on the image information.

In some embodiments, the transceiver module 100 is further specifically configured to: when the category information indicates that the living body is the human, obtain image information of the human; determine an identity of the human based on the image information; and adjust a cockpit environment based on a preset driving preference corresponding to the identity, where the preset driving preference includes one or more of the following: a tilt angle of a seat backrest, a location of a seat cushion relative to a cockpit floor, speaker volume, content played by a player, and an air conditioner temperature.

In some embodiments, the transceiver module 100 is specifically configured to: obtain a selection instruction of a user when the existence information indicates that a plurality of living bodies exist, where the first area is determined according to the selection instruction of the user; and transmit the second transmit wave to the first area indicated by the selection instruction.

In some embodiments, the transceiver module 100 is further configured to: after the existence information indicates that the living body exists in the cockpit area, and before the second transmit wave is transmitted to the first area in which the living body is located, increase the power of the first transmit wave; transmit, to the cockpit area of the vehicle, a first transmit wave whose power is increased; receive a first reflection wave of the first transmit wave whose power is increased; and update a location of the living body based on the first reflection wave of the first transmit wave whose power is increased.

In some embodiments, the transceiver module 100 is further configured to receive a second reflection wave corresponding to the second transmit wave; and the processing module is further configured to update the location information of the living body based on the second reflection wave and the location information that is of the living body and that is determined based on the first reflection wave.

In some embodiments, the processing module 200 is further configured to predict a location of the living body based on the second reflection wave; and the transceiver module 100 is further configured to transmit the second transmit wave to a second area based on the predicted location of the living body, where the second area is an area of the predicted location of the living body.

In some embodiments, the first area is an area of a seat in which the location of the living body is located.

In some embodiments, the transceiver module 100 is specifically configured to: transmit the second transmit wave to an area of a driver seat when the living body exists in the area of the driver seat.

In some embodiments, the living body further includes: an animal.

In some embodiments, a location of the living body is used to determine depth information of the living body, an air exhaust direction of an air conditioner, a sound output direction of a speaker, a light illumination direction, and a shooting direction of a camera.

Technical effects and detailed descriptions of the detection apparatus provided in this embodiment of this application are the same as those of the detection method provided in this embodiment of this application. For brevity, details are not described herein again. It should be noted that the foregoing modules, namely, the transceiver module 100 and the processing module 200, are configured to perform related steps of the foregoing method. For example, the obtaining module 100 is configured to perform related content like step S 100, step S200, step S200, step S2, and step S5, and the determining module 200 is configured to perform related content like step S300, step S3, step S4, step S6, step S8, and step S10.

In this embodiment, the structured light projection apparatus is presented in a form of a module. The "module" herein may include an application-specific integrated circuit (application-specific integrated circuit, ASIC), a processor and a memory that execute one or more software or firmware programs, an integrated logic circuit, and/or another device that can provide the foregoing functions. In addition, the transceiver module 100 and the processing module 200 may be implemented by using a computing device shown in FIG. 8.

FIG. 8 is a schematic diagram of a structure of a computing device 1500 according to an embodiment of this application. The computing device 1500 includes a processor 1510 and a memory 1520.

The processor 1510 may be connected to the memory 1520. The memory 1520 is configured to store program code and data. Therefore, the memory 1520 may be a storage unit inside the processor 1510, or may be an external storage unit independent of the processor 1510, or may be a component that includes a storage unit inside the processor 1510 and an external storage unit independent of the processor 1510.

Optionally, the computing device 1500 may further include a bus. The memory 1520 and a communication interface may be connected to the processor 1510 through the bus. The bus may be a peripheral component interconnect (Peripheral Component Interconnect, PCI) bus, an extended industry standard architecture (Extended Industry Standard Architecture, EISA) bus, or the like. The bus can be classified into an address bus, a data bus, a control bus, and the like.

It should be understood that, in this embodiment of this application, the processor 1510 may be a central processing unit (central processing unit, CPU). The processor may further be another general-purpose processor, a digital signal processor (digital signal processor, DSP), an ASIC, a field programmable gate array (field programmable gate array, FPGA) or another programmable logic device, a discrete gate or transistor logic device, a discrete hardware component, or the like The general-purpose processor may be a microprocessor, or the processor may be any conventional processor or the like. Alternatively, the processor 1510 uses one or more integrated circuits, and is configured to execute a related program, to implement the technical solutions provided in embodiments of this application.

The memory 1520 may include a read-only memory and a random access memory, and provide instructions and data for the processor 1510. Apart of the processor 1510 may further include a non-volatile random access memory. For example, the processor 1510 may further store device category information.

When the computing device 1500 runs, the processor 1510 executes computer-executable instructions in the memory 1520 to perform the operation steps of the foregoing method.

It should be understood that the computing device 1500 according to this embodiment of this application may correspond to a corresponding body in the methods according to embodiments of this application, and the foregoing and other operations and/or functions of the modules in the computing device 1500 are separately used to implement corresponding procedures of the methods in this embodiment. For brevity, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, the part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When being executed by a processor, the program is used to perform a detection method. The method includes at least one of the solutions described in the foregoing embodiments.

The computer storage medium in embodiments of this application may be any combination of one or more computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device, or any combination thereof. A more specific example (a non-exhaustive list) of the computer-readable storage medium includes: an electrically connected or portable computer disk with one or more wires, a hard disk, a random access memory (RAM), a read-only memory (ROM), an erasable programmable read-only memory (EPROM or flash), an optical fiber, a portable compact disc read-only memory (CD-ROM), an optical storage device, a magnetic storage device, or any suitable combination thereof. In this specification, the computer-readable storage medium may be any tangible medium that includes or stores a program, and the program may be used by an instruction execution system, an apparatus, or a device or used in combination with the instruction execution system, apparatus, or device.

The computer-readable signal medium may include a data signal that is propagated in baseband or as part of a carrier wave, where the data signal carries computer-readable program code. The propagated data signal may be in a plurality of forms, including but not limited to an electromagnetic signal, an optical signal, or any appropriate combination thereof. The computer-readable signal medium may alternatively be any computer-readable medium other than the computer-readable storage medium. The computer-readable medium may send, propagate, or transmit a program used by an instruction execution system, an apparatus, or a device or used in combination with the instruction execution system, apparatus, or device.

The program code included in the computer-readable medium may be transmitted by using any appropriate medium, including but not limited to wireless, electric wire, optical cable, radio frequency (radio frequency, RF), or any appropriate combination thereof.

Computer program code used to perform operations in this application may be written in one or more program design languages or a combination thereof. The program design language includes an object-oriented program design language like Java, Smalltalk, or C++, and further includes a conventional procedural program design language like a "C" language or a similar program design language. The program code may be entirely executed on a user computer, partially executed on a user computer, executed as an independent software package, partially executed on a user computer while partially executed on a remote computer, or entirely executed on a remote computer or a server. When the remote computer is involved, the remote computer may be connected to the user computer through any type of network, including a local area network (LAN) or a wide area network (WAN), or may be connected to an external computer (for example, may be connected to the external computer through the Internet by using an Internet service provider).

In the specification and claims, terms such as "first" and "second" are merely used to distinguish between similar objects, and do not indicate a specific order of the objects. It may be understood that specific orders or sequences may be exchanged if permitted, so that embodiments of this application described herein can be implemented in an order other than the order illustrated or described herein.

The term "include" used in the specification and claims should not be construed as being limited to the content listed below; and the term does not exclude other elements or steps. It should be construed as specifying existence of the mentioned feature, whole, step, or part, but does not preclude existence or addition of one or more other features, wholes, steps, or parts and groups thereof. Therefore, an expression "a device including an apparatus A and an apparatus B" should not be limited to a device including only a component A and a component B.

"One embodiment" or "an embodiment" mentioned in this specification means that a specific feature, structure, or property described with reference to the embodiment is included in at least one embodiment of this application. Therefore, the term "in one embodiment" or "in an embodiment" that appears in this specification does not necessarily indicate a same embodiment, but may indicate a same embodiment. In addition, in one or more embodiments, particular features, structures, or properties can be combined in any suitable manner, as it is clear from this disclosure to a person of ordinary skill in the art.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A detection method, comprising:
transmitting a first transmit wave to a cockpit area of a vehicle;
receiving a first reflection wave corresponding to the first transmit wave;
determining existence information and location information of a living body in the cockpit area based on the first reflection wave; and
transmitting, to a first area in which the living body is located, a second transmit wave when the existence information indicates that the living body exists in the cockpit area, wherein a power of the second transmit wave is higher than a power of the first transmit wave, and the first area in which the living body is located is determined based on the location information of the living body.

2. The method according to claim 1, wherein the transmitting, to a first area in which the living body is located, a second transmit wave when the existence information indicates that the living body exists in the cockpit area specifically comprises:
obtaining category information of the living body when the existence information indicates that the living body exists; and
transmitting the second transmit wave to the first area when the category information indicates that the living body is a human.

3. The method according to claim 2, wherein the obtaining category information of the living body specifically comprises:
obtaining image information of the living body; and
determining the category information of the living body based on the image information.

4. The method according to claim 2 or 3, wherein when the category information indicates that the living body is the human, the method further comprises:
obtaining image information of the human;
determining an identity of the human based on the image information; and
adjusting a cockpit environment based on a preset driving preference corresponding to the identity, wherein the preset driving preference comprises one or more of the following:
a tilt angle of a seat backrest, a location of a seat cushion relative to a cockpit floor, speaker volume, content played by a player, and an air conditioner temperature.

5. The method according to claim 1, wherein the transmitting, to a first area in which the living body is located, a second transmit wave when the existence information indicates that the living body exists in the cockpit area specifically comprises:
obtaining a selection instruction of a user when the existence information indicates that a plurality of living bodies exist, wherein the first area is determined according to the selection instruction of the user; and
transmitting the second transmit wave to the first area indicated by the selection instruction.

6. The method according to claim 1, wherein before the transmitting, to a first area in which the living body is located, a second transmit wave after the existence information indicates that the living body exists in the cockpit area, the method further comprises:
increasing the power of the first transmit wave;
transmitting, to the cockpit area of the vehicle, a first transmit wave whose power is increased;
receiving a first reflection wave of the first transmit wave whose power is increased; and
updating a location of the living body based on the first reflection wave of the first transmit wave whose power is increased.

7. The method according to claim 1, further comprising:
receiving a second reflection wave corresponding to the second transmit wave; and
updating the location information of the living body based on the second reflection wave and the location information that is of the living body and that is determined based on the first reflection wave.

8. The method according to claim 7, further comprising:
predicting a location of the living body based on the second reflection wave; and
transmitting the second transmit wave to a second area based on the predicted location of the living body, wherein the second area is an area of the predicted location of the living body.

9. The method according to any one of claims 1 to 8, wherein the first area is an area of a seat in which the location of the living body is located.

10. The method according to claim 9, further comprising: transmitting the second transmit wave to an area of a driver seat when the living body exists in the area of the driver seat.

11. The method according to any one of claims 2 to 10, wherein the living body further comprises: an animal.

12. The method according to any one of claims 1 to 11, wherein the location of the living body is used to determine depth information of the living body, an air exhaust direction of an air conditioner, a sound output direction of a speaker, a light illumination direction, and a shooting direction of a camera.

13. A detection apparatus, comprising:
a transceiver module, configured to transmit a first transmit wave to a cockpit area of a vehicle, wherein
the transceiver module is further configured to receive a first reflection wave corresponding to the first transmit wave; and
a processing module, configured to determine existence information and location information of a living body in the cockpit area based on the first reflection wave, wherein
the transceiver module is further configured to: transmit, to a first area in which the living body is located, a second transmit wave when the existence information indicates that the living body exists in the cockpit area, wherein a power of the second transmit wave is higher than a power of the first transmit wave, and the first area in which the living body is located is determined based on the location information of the living body.

14. The apparatus according to claim 13, wherein the transceiver module is specifically configured to:
obtain category information of the living body when the existence information indicates that the living body exists; and
transmit the second transmit wave to the first area when the category information indicates that the living body is a human.

15. The apparatus according to claim 14, wherein the transceiver module is specifically configured to:
obtain image information of the living body; and
determine the category information of the living body based on the image information.

16. The apparatus according to claim 14 or 15, wherein the transceiver module is further specifically configured to: when the category information indicates that the living body is the human,
obtain image information of the human;
determine an identity of the human based on the image information; and
adjust a cockpit environment based on a preset driving preference corresponding to the identity, wherein the preset driving preference comprises one or more of the following:
a tilt angle of a seat backrest, a location of a seat cushion relative to a cockpit floor, speaker volume, content played by a player, and an air conditioner temperature.

17. The apparatus according to claim 13, wherein the transceiver module is specifically configured to:
obtain a selection instruction of a user when the existence information indicates that a plurality of living bodies exist, wherein the first area is determined according to the selection instruction of the user; and
transmit the second transmit wave to the first area indicated by the selection instruction.

18. The apparatus according to claim 13, wherein the transceiver module is further configured to: after the existence information indicates that the living body exists in the cockpit area, and before the second transmit wave is transmitted to the first area in which the living body is located, increase the power of the first transmit wave;
transmit, to the cockpit area of the vehicle, a first transmit wave whose power is increased;
receive a first reflection wave of the first transmit wave whose power is increased; and
update a location of the living body based on the first reflection wave of the first transmit wave whose power is increased.

19. The apparatus according to claim 13, wherein
the transceiver module is further configured to receive a second reflection wave corresponding to the second transmit wave; and
the processing module is further configured to update the location information of the living body based on the second reflection wave and the location information that is of the living body and that is determined based on the first reflection wave.

20. The apparatus according to claim 19, wherein
the processing module is further configured to predict a location of the living body based on the second reflection wave; and
the transceiver module is further configured to transmit the second transmit wave to a second area based on the predicted location of the living body, wherein the second area is an area of the predicted location of the living body.

21. The apparatus according to any one of claims 13 to 20, wherein the first area is an area of a seat in which the location of the living body is located.

22. The apparatus according to claim 21, wherein the transceiver module is specifically configured to: transmit the second transmit wave to an area of a driver seat when the living body exists in the area of the driver seat.

23. The apparatus according to any one of claims 14 to 22, wherein the living body further comprises: an animal.

24. The apparatus according to any one of claims 13 to 23, wherein the location of the living body is used to determine depth information of the living body, an air exhaust direction of an air conditioner, a sound output direction of a speaker, a light illumination direction, and a shooting direction of a camera.

25. A radar, comprising the detection apparatus according to any one of claims 13 to 24 and an antenna.

26. A computer-readable storage medium, wherein the computer-readable storage medium stores program code, and when the computer code is executed by a terminal or a processor in a terminal, the detection method according to any one of claims 1 to 12 is implemented.

27. A computer program product, wherein when the computer program product runs on a computer, the detection method according to any one of claims 1 to 12 is implemented.

28. A vehicle, comprising the detection apparatus according to any one of claims 13 to 24 and an antenna.
